# FASCICULE DE BREVET EUROPEEN

(11) **EP 4 294 723 B1**
(45) Date de publication et mention de la délivrance du brevet: **29.01.2025**
(21) Numéro de dépôt: 22706627.1
(22) Date de dépôt: 21.02.2022
(51) Int. Cl.: B64C 39/02, B64C 15/14, B64D 27/02

(54) **AÉRONEF SANS ÉQUIPAGE FIABILISÉ ET PROCÉDÉ DE PILOTAGE D'UN TEL AÉRONEF SANS ÉQUIPAGE**
UNBEMANNTES FLUGGERÄT MIT VERBESSERTER ZUVERLÄSSIGKEIT SOWIE VERFAHREN ZUR STEUERUNG EINES DERARTIGEN FLUGGERÄTS
UNMANNED AERIAL VEHICLE WITH ENHANCED RELIABILITY AND METHOD OF CONTROLLING SUCH AN AIRCRAFT

(30) Priorité: 22.02.2021 FR 2101680
(43) Date de publication de la demande: 27.12.2023
(73) Titulaire: THALES, 92400 Courbevoie (FR); Issoire Aviation, 63500 Le Broc (FR)
(72) Inventeur: GUILLOUET, Eric, 31036 TOULOUSE (FR); KLUR, Romain, 63500 ISSOIRE (FR); MONIOT, Philippe, 63500 ISSOIRE (FR); GUTIERREZ, Pierre, 63500 ISSOIRE (FR)
(74) Mandataire: Lavoix
(86) Numéro de dépôt international: PCT/EP2022/054231
(87) Numéro de publication internationale: WO 2022/175519

(56) Documents cités:
- WO-A1-2019/034765
- WO-A1-2019/090046
- DE-A1- 102014 000 640
- GB-A- 2 550 916

## Description

La présente invention concerne un aéronef sans équipage du type comportant : une cellule comportant un fuselage, une voilure, et un empennage ; au moins un groupe de propulsion principal, constitué d'au moins un moteur et d'au moins une hélice ; un dispositif de commandes de vol, comportant une pluralité d'actionneurs électriques, de surfaces mobiles et de capteurs ; et un calculateur de pilotage automatique propre à adresser des consignes au groupe de propulsion principal et au dispositif de commande de vol.

Les documents GB 2 550 916 A et WO 2019/090046 A1 des aéronefs du type précité.

La présente invention concerne notamment un aéronef du genre avion.

Un avion, c'est-à-dire un aérodyne à voilure fixe, sans équipage est dénommé « UAV » (pour « véhicule aérien sans pilote » ou « Unmanned Aircraft Vehicle » en anglais) ou, plus généralement, « drone aérien ».

Le niveau de sécurité des drones aériens existants est insuffisant pour permettre leur utilisation dans un espace aérien non ségrégué (c'est-à-dire un espace aérien qui n'est pas réservé exclusivement à la circulation de ce drone) et/ou au-dessus des populations.

Pour être autorisés à effectuer de telles opérations, les drones aériens devront être certifiés afin de garantir qu'ils présentent un niveau de sécurité égal ou supérieur à celui des avions avec équipage.

Selon les derniers développements des réglementations à venir pour les drones aériens amenés à survoler des zones peuplées, sera exigé la démonstration que la probabilité de survenue de tout évènement menant à la perte de contrôle du drone aérien est inférieure à 10⁻⁷, de préférence à 10⁻⁸, par heure de vol.

Dans le domaine aérien, un tel niveau de fiabilité est normalement atteint par la redondance des systèmes critiques embarqués à bord de manière à faire face à une ou plusieurs pannes ou dysfonctionnements. Ceci est en particulier valable pour le dispositif de commandes de vol.

Dans le cas des avions civils équipés de dispositifs de commandes de vol électriques (c'est-à-dire comportant des actionneurs à commandes électriques), les pannes sont couvertes par la triplication des actionneurs électriques, des surfaces mobiles et des capteurs associés. Des logiques automatiques de détection et d'isolation permettent de détecter et d'inhiber le ou les organes défaillants.

Cependant, une telle architecture pour un dispositif de commandes de vol peut difficilement être portée sur un drone aérien. Il s'agit non seulement d'une architecture complexe (gestion de plusieurs actionneurs en redondance les uns des autres), mais surtout une telle architecture est difficile à mettre à l'échelle d'un drone, notamment d'un drone léger (c'est-à-dire d'environ 100 kg et de 2 à 8 m d'envergure), car cela nécessite une division des surfaces mobiles, de leurs axes de rotation, et une multiplication des actionneurs et des capteurs de position. Or ceci est peu commode à réaliser sur des voilures ou des empennages déjà très fins et étroits. Cela risque même d'introduire des faiblesses supplémentaires.

De plus, pour un drone aérien, le surpoids occasionné par une triplication des actionneurs est rédhibitoire, car cela impacte négativement les performances du drone.

Tout ceci conduirait finalement à un drone dont le coût de fabrication et de maintenance serait trop élevé.

Le but de la présente invention est par conséquent de résoudre ce problème sans impacter les capacités d'emport déjà limitées d'un drone aérien et plus généralement d'un aéronef sans pilote.

Pour cela l'invention a pour objet un aéronef sans équipage et un procédé de pilotage de l'aéronef sans équipage précédent selon les revendications annexées.

L'invention et ses avantages seront mieux compris à la lecture de la description détaillée qui va suivre d'un mode de réalisation particulier, donné uniquement à titre illustratif et non limitatif, cette description étant faite en se référant aux dessins annexés sur lesquels :
- La figure 1 est une représentation schématique en perspective d'un premier mode de réalisation d'un aéronef sans équipage selon l'invention ;
- la figure 2 est une représentation fonctionnelle du système de propulsion et du système de commandes de vol de l'aéronef sans équipage de la figure 1 ;
- la figure 3 est une représentation sous forme de blocs d'un procédé d'utilisation de l'aéronef sans équipage des figures 1 et 2 ; et,
- la figure 4 est une représentation schématique en perspective d'un second mode de réalisation d'un aéronef sans équipage selon l'invention.

De manière générale, l'invention propose de fiabiliser un aéronef sans équipage, notamment un drone aérien monomoteur (thermique ou électrique), en adjoignant une paire de groupes de propulsion auxiliaires, le plan de l'hélice de chaque groupe de propulsion auxiliaire étant orientable, afin de pallier un dysfonctionnement du dispositif de commandes de vol de l'aéronef, en contrôlant la trajectoire suivie par ce dernier dans tous les axes (roulis, lacet, tangage) de manière à permettre à l'aéronef de poursuivre sa mission.

Avantageusement, la paire de groupes de propulsion auxiliaires permet de pallier un dysfonctionnement du groupe de propulsion principal de l'aéronef. Avantageusement encore, la paire de groupes de propulsion auxiliaires permet de venir en appoint du groupe de propulsion principal et/ou du dispositif de commandes de vol dans certaines phases d'utilisation de l'aéronef (propulsion d'appoint pour le décollage ou l'atterrissage, dirigeabilité au sol...).

Le calculateur de pilotage automatique de l'aéronef sans équipage doit alors être reprogrammé de manière adaptée pour offrir ces fonctionnements.

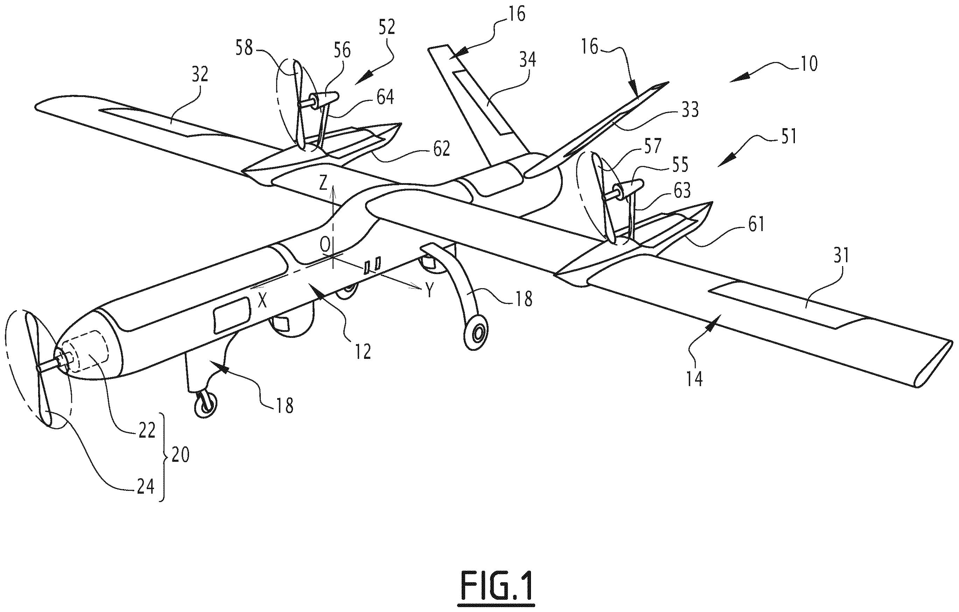

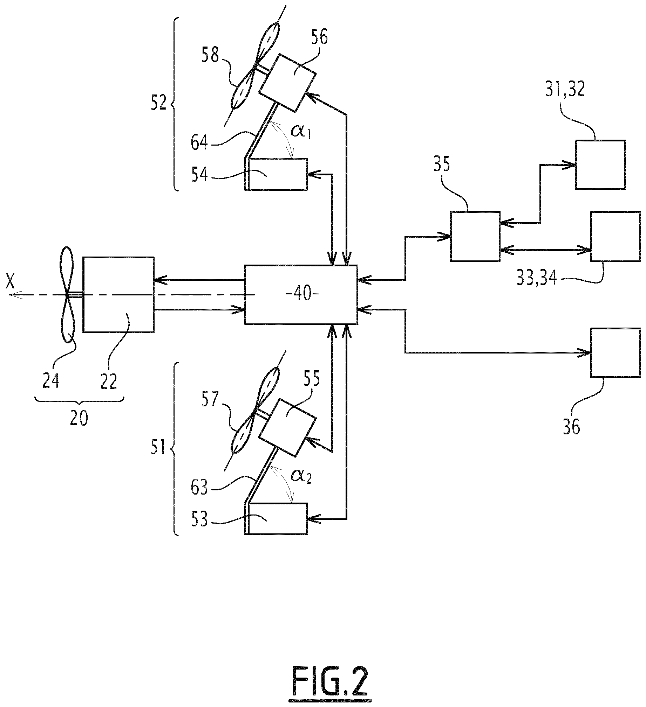

Les figures 1 et 2 représentent un premier mode de réalisation d'un aéronef sans pilote selon l'invention. Il s'agit d'un avion sans équipage, aussi dénommé drone aérien.

Ce drone 10 est contrôlé par un pilote distant via une station de contrôle.

De manière connue, le drone 10 comporte une cellule. La cellule est constituée, dans le mode de réalisation illustré, d'un fuselage 12, d'une voilure 14, d'un empennage en « V » 16 et d'un train d'atterrissage 18.

En variante, la cellule comporte plusieurs fuselages.

En variante, d'autres moyens d'atterrissage sont prévus comme des skis, des flotteurs ou autres.

En variante, au lieu d'être en « V », l'empennage comporte un stabilisateur horizontal et un stabilisateur vertical.

Un repère est associé au centre de gravité 0 du drone 10. Il comporte un axe longitudinal X orienté de l'arrière vers l'avant du fuselage 12 ; un axe transversal Y orienté de droite à gauche ; et un axe dit vertical, Z, perpendiculaire au plan XY, et destiné à être parallèle à la verticale du lieu lorsque l'angle de tangage (angle de rotation autour de l'axe Y) et l'angle de roulis (autour de l'axe X) du drone sont nuls. L'angle de lacet est l'angle de rotation autour de l'axe Z.

Le drone 10 comporte un groupe de propulsion principal 20, comportant un moteur 22 et une hélice 24, par exemple montés longitudinalement, à l'avant du fuselage 12. De préférence, pour obtenir une autonomie importante, le moteur 22 est un moteur thermique plutôt qu'un moteur électrique.

Le drone 10 comporte un dispositif de commandes de vol 30. Dans le présent document, par dispositif de commandes de vol, on entend un ensemble formé par les différentes surfaces mobiles (ailerons 31 et 32 sur la voilure 14 et gouvernes 33 et 34 sur l'empennage 16), ainsi que les actionneurs électriques permettant de les déplacer et les capteurs permettant de mesurer leur position instantanée. Sur la figure 2, la pluralité d'actionneurs est référencée de manière générale par le chiffre 35 et la pluralité de capteurs, par le chiffre 36.

Selon l'invention, le drone 10 comporte une paire de groupes de propulsion auxiliaires comportant un premier groupe de propulsion auxiliaire 51 et un second groupe de propulsion auxiliaire 52.

Ils sont disposés sur la cellule du drone 10, symétriquement par rapport au plan XZ du drone. Dans le mode de réalisation de la figure 1, les premier et second groupes de propulsion auxiliaires 51 et 52 sont montés sur la voilure 14, de préférence au-dessus et à l'arrière de celle-ci.

Chaque groupe de propulsion auxiliaire est de préférence propre à être escamoté dans un carénage dédié prévu sur la cellule du drone aérien. Ainsi le drone 10 comporte un premier carénage 61 sur l'aile gauche pour recevoir le premier groupe 51 et un second carénage 62 sur l'aile droite pour recevoir le second groupe 52. Chaque carénage présente une forme aérodynamique. Il est muni d'une trappe qu'il est possible de commander en ouverture lorsque le groupe de propulsion auxiliaire doit être déployé ou escamoté.

Le premier groupe de propulsion auxiliaire 51 comporte un actionneur d'inclinaison 53, un mât 63, un moteur auxiliaire 55 et une hélice 57.

Le moteur auxiliaire 55 est de préférence du type électrique.

Le premier ensemble de propulsion auxiliaire, moteur auxiliaire 55 et hélice 57, est monté sur le mât 63.

Le mât 63 est mobile par rapport à la cellule du drone aérien. Dans le mode de réalisation de la figure 1, le mât 63 est monté pivotant sur la cellule autour d'un axe parallèle à l'axe Y. L'angle d'inclinaison α1 du mât 63, évalué par rapport à l'axe X, est ajustable par l'actionneur d'inclinaison 53. Si l'hélice 57 est montée telle que son axe soit à 90° par apport au mât 63, l'angle d'inclinaison α1 est également l'angle d'inclinaison du plan de l'hélice par rapport à l'axe X. De préférence, lorsque le premier groupe de propulsion auxiliaire 51 est déployé, l'angle d'inclinaison est ajustable sur une fourchette comprise typiquement entre 45° et 145°, par exemple entre 70° et 110° (un angle d'inclinaison de 90° indiquant que le plan de l'hélice est perpendiculaire à l'axe X). Les seuils de la fourchette d'ajustement de l'angle d'inclinaison sont avantageusement réglables.

De manière similaire, le second groupe de propulsion auxiliaire 52 comporte un actionneur d'inclinaison 54, un mât 64, un moteur auxiliaire 56 et une hélice 58.

Notamment, le second ensemble de propulsion auxiliaire, moteur auxiliaire 56 et hélice 58, est monté sur le mât 64 dont l'angle d'inclinaison α2, évalué par rapport à l'axe X, est réglable par l'actionneur d'inclinaison 54.

Les actionneurs d'inclinaison 53 et 54 sont indépendants l'un de l'autre et les moteurs 57 et 58 sont indépendants l'un de l'autre, de manière à commander de manière différentielle l'angle d'inclinaison des mâts 63 et 64 et la vitesse de rotation des hélices 57 et 58, pour pouvoir contrôler la trajectoire du drone 10.

Avantageusement, une batterie d'alimentation dédiée (non représentée) est logée dans le premier carénage 61 de réception du premier groupe de propulsion auxiliaire 51 pour alimenter le moteur 55 et une batterie d'alimentation dédiée (non représentée) est logée dans le second carénage 62 de réception du second groupe de propulsion auxiliaire 52. Ceci est préférable à une batterie commune implantée dans le fuselage afin d'éviter les modes communs de défaillances et conserver les volumes utiles du fuselage du drone.

Le drone aérien 10 comporte un calculateur de pilotage automatique 40, qui est programmé pour déterminer et transmettre des consignes adaptées au groupe de propulsion principal 20 (essentiellement la vitesse de rotation de l'hélice 24), et au dispositif de commandes de vol 30 (pour chaque actionneur 35, l'angle d'orientation de la surface mobile commandée par cet actionneur), mais également à chacun des premier et second groupes de propulsion auxiliaires 51 et 52 (vitesse de rotation de l'hélice 57, 58 et angle d'inclinaison du plan de l'hélice α1 et α2).

Par exemple, le calculateur 40 exécute un premier programme d'ordinateur de diagnostic de l'état de fonctionnement courant de chacun des organes du système de contrôle de vol, à savoir le dispositif de commandes de vol, le groupe de propulsion principal et la paire de groupes de propulsion auxiliaires. Chacun de ces organes retransmet au calculateur 40 des variables d'état permettant à ce dernier de diagnostiquer en temps réel la survenue d'une panne ou d'un dysfonctionnement.

Le calculateur 40 met en oeuvre un second programme d'ordinateur prenant de préférence la forme d'un automate à états, propre à passer d'un mode de fonctionnement à un autre, en fonction de la phase de vol du drone 10 et de l'état de fonctionnement des différents organes du système de contrôle de vol, tel qu'indiqué par le premier programme de diagnostic. Dans un mode de fonctionnement donné, l'automate exécute des lois de commandes spécifiques à ce mode pour déterminer des consignes. Les différents modes de fonctionnement seront évoqués ci-dessous lors de la présentation d'un exemple d'utilisation du drone 10.

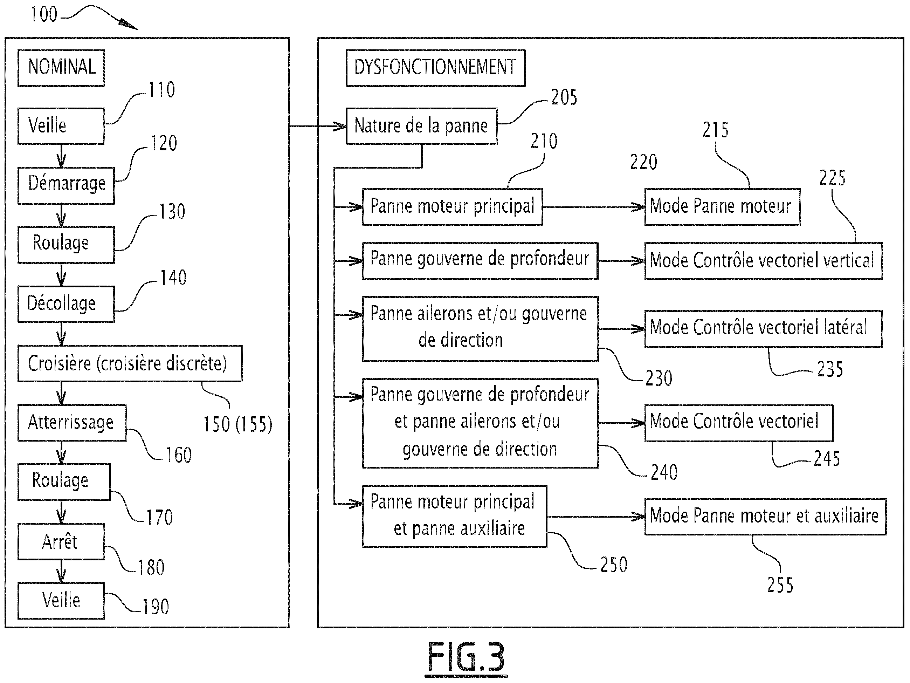

La figure 3 illustre un procédé de pilotage du drone 10. Ce procédé se décompose en une suite d'étapes en fonctionnement nominal (c'est-à-dire lorsqu'aucun dysfonctionnement n'est détecté par le premier programme) et une suite d'étapes en cas de détection d'un dysfonctionnement (c'est-à-dire lorsque le premier programme détecte une panne).

En fonctionnement nominal, le drone est initialement dans un mode « veille » (étape 110). Il est sous tension électrique, au parking, moteur principal 22 éteint et groupes de propulsion auxiliaires 51 et 52 rétractés à l'intérieur de leur carénage respectifs 61, 62.

Le plan de vol est chargé dans le calculateur de pilotage automatique 40 par le pilote depuis une station de contrôle distante. Le pilote lance l'exécution du plan de vol.

L'automate exécuté par le calculateur 40 engage alors un mode « démarrage » (étape 120). Il commande le démarrage du moteur principal 22. Avantageusement, pour aider au déplacement du drone 10, le calculateur 40 commande le déploiement des mâts 63 et 64 à la verticale (angle d'inclinaison de 90°) et le démarrage des moteurs auxiliaires 55 et 56, par exemple dans un régime ralenti.

Quand le pilote active la phase de roulage, l'automate exécuté par le calculateur 40 engage un mode « roulage » (étape 130). Ce mode prévoit l'utilisation de lois de contrôle spécifiques au roulage afin de commander la vitesse des deux moteurs auxiliaires de manière différentielle pour effectuer le guidage selon le plan des voies de circulation (« taxiways » en anglais) jusqu'à s'aligner avec l'axe de la piste de décollage. L'empennage 16 du drone 10 peut assister les moteurs principal et auxiliaires pour augmenter la dirigeabilité.

Quand le drone 10 est aligné dans l'axe de la piste, l'automate du calculateur engage un mode « décollage » (étape 140) : les mâts 63 et 64 des groupes de propulsion auxiliaires 51 et 52 sont inclinés selon un angle d'inclinaison d'environ 70° par rapport à l'axe longitudinale X et les moteurs auxiliaires 55 et 56 sont commandés à pleine vitesse, de manière à assurer un décollage court.

Une fois le drone 10 est en vol à une altitude de sécurité suffisante, l'automate engage un mode « croisière » (étape 150), dans lequel les moteurs auxiliaires 55 et 56 sont arrêtés et les mâts 63 et 64 sont rétractés à l'intérieur de la structure, de manière à réduire la traînée du drone 10.

Si nécessaire, l'automate peut engager un mode « croisière discrète » (étape 155), dans lequel le moteur principal 22 est éteint, tandis que les mâts 63 et 64 sont déployés et les moteurs auxiliaires 55 et 56 sont activés selon une loi de contrôle de tenue de vitesse. La propulsion est ainsi assurée par les moteurs auxiliaires électriques et non plus par le moteur principal thermique, ce qui permet de réduire la signature acoustique du drone 10. Le besoin d'un fonctionnement en croisière discrète peut être dû à des contraintes environnementales, opérations militaires, réduction de nuisances (sonores). Ce mode est engagé/désengagé sur demande du pilote ou programmé dans le plan de vol.

En fin de vol, en approche finale de la piste d'atterrissage, l'automate du calculateur 40 engage un mode « atterrissage » (étape 160) : les mâts 63 et 64 sont déployés et les moteurs auxiliaires 55 et 56 activés de manière à réaliser un effet de freinage du drone 10, pour réaliser un atterrissage court au moment du contact avec le sol.

Une fois au sol, l'automate engage le mode « roulage » (étape 170) jusqu'au point de stationnement du drone 10.

L'automate exécuté par le calculateur 40 engage alors un mode « arrêt » (étape 180).

Le drone se retrouve à nouveau en mode « veille » (étape 190).

A tout moment, en cas de détection d'un dysfonctionnement par le premier programme de diagnostic exécuté par le calculateur 40, le procédé de pilotage 100 consiste à réaliser les étapes suivantes, en fonction de la nature de la panne identifiée par le module de diagnostic (étape 205).

Lorsque le dysfonctionnement détecté correspond à une panne du moteur principal 22 (étape 210), l'automate exécuté par le calculateur 40 engage un mode « panne moteur » (étape 215) : les mâts 63, 64 sont alors déployés (s'ils ne l'étaient pas déjà) et inclinés à 90° et les moteurs auxiliaires 55 et 56 activés selon une loi de contrôle de tenue de vitesse.

Lorsque le dysfonctionnement détecté correspond à une panne de la gouverne de profondeur (étape 220), l'automate engage un mode « contrôle vectoriel vertical » (étape 225). Dans ce mode, les mâts 63 et 64 sont déployés et inclinés selon un angle d'inclinaison permettant de contrôler verticalement le drone 10. Une loi de contrôle commande la vitesse des moteurs auxiliaires 55 et 56 pour réaliser un changement de pente de la trajectoire suivie par le drone 10. Par exemple avec un angle d'inclinaison inférieur à 90°, par exemple de 80°, le drone 10 prend de l'altitude et avec un angle d'inclinaison supérieur à 90°, par exemple de 100°, le drone perd de l'altitude. Ainsi, l'inclinaison symétrique des deux mâts permet le contrôle vectoriel de l'avion sans équipage dans le plan vertical (c'est-à-dire selon l'axe Y de tangage), générant par des lois de contrôle appropriées une montée ou une descente au taux désiré.

Lorsque le dysfonctionnement détecté correspond à une panne des ailerons et/ou de la gouverne de direction (étape 230), l'automate engage un mode de « contrôle vectoriel latéral » (étape 235): les mâts 63, 64 sont déployés et inclinés à la verticale et une loi de contrôle commande la vitesse des moteurs auxiliaires 55 et 56 de manière différentielle pour réaliser le virage désiré. Par exemple, alors que les moteurs auxiliaires tournent à la même vitesse, la vitesse du moteur auxiliaire de droite 56 est diminuée et/ou la vitesse du moteur auxiliaire de gauche 55 est augmentée pour effectuer un virage à droite. Plus la différence de vitesse de rotation des hélices 57 et 28 sera importante, plus le virage sera serré. Si nécessaire, les mâts peuvent être commandés en inclinaison différentielle pour accroitre l'effet latéral de la poussée vectorielle. Ce mode de contrôle complète l'effet des gouvernes latérales encore disponibles. Ainsi, la vitesse dissymétrique des deux hélices provoque une commande différentielle générant une réponse de l'avion selon l'axe Z de lacet induisant une réponse selon l'axe X de roulis, qui, par des lois de contrôle appropriées, permet d'effectuer un virage coordonné au taux désiré. Cette commande dissymétrique de vitesse peut être assistée par une inclinaison différentielle des mâts si nécessaire.

Lorsque le dysfonctionnement détecté correspond à une panne conjuguée de la gouverne de profondeur, des ailerons et de la gouverne de direction (étape 240), l'automate passe dans un mode de « contrôle vectoriel » (245) : les mâts 63 et 64 sont déployés à la verticale et une loi de contrôle commande à la fois la vitesse des moteurs auxiliaires 55 et 56 et l'angle d'inclinaison des mâts 55 et 56 de manière à contrôler l'avion dans le plan horizontal et dans le plan vertical. Ce mode combine et généralise les deux modes précédents. On récupère ainsi une manoeuvrabilité selon les trois axes X, Y et Z.

Lorsque le dysfonctionnement détecté correspond à une panne d'un des moteurs auxiliaires après une panne du moteur principal (étape 250), l'automate passe dans un mode de « panne moteur et auxiliaire » (255) dans lequel le contrôle de la vitesse du drone 10 se fait avec le groupe de propulsion auxiliaire résiduel (en vitesse de rotation de son moteur auxiliaire et angle d'inclinaison de son hélice).

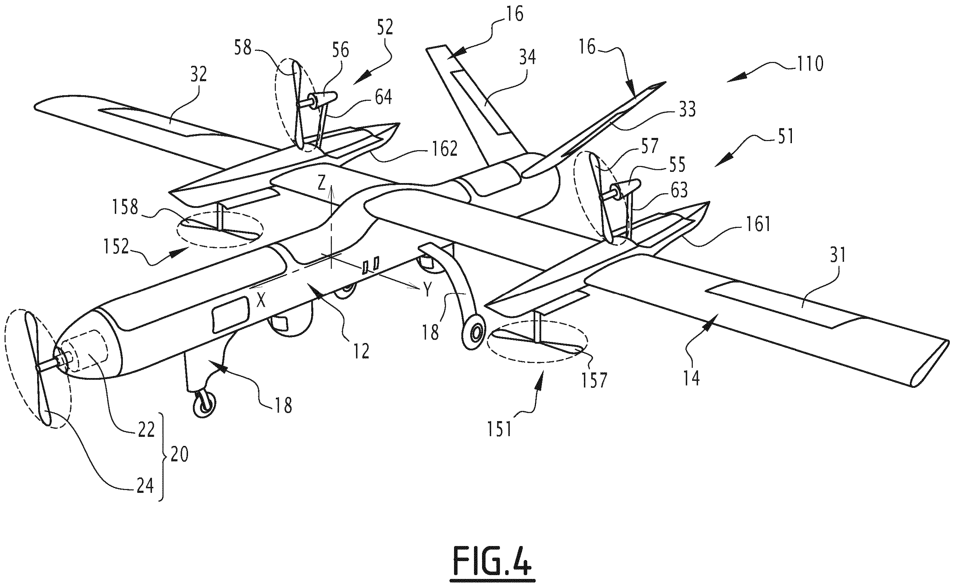

La figure 4 représente un second mode de réalisation d'un aéronef sans équipage selon l'invention. Il s'agit également d'un drone aérien.

Un équipement du drone 110 de la figure 4 identique à un équipement du drone 10 de la figure 1 est référencé par un chiffre qui est égal à celui par lequel est référencé cet équipement identique. Un équipement du drone de la figure 4 similaire à un équipement du drone de la figure 1 est référencé par un chiffre qui est égal à celui par lequel est référencé cet équipement similaire augmenté d'une centaine.

Le drone 110 diffère du drone 10 uniquement en ce qu'il comporte deux paires de groupes de propulsion auxiliaires, une première paire 51, 52 à l'arrière et au-dessus de la voilure 14 et une seconde paire 151, 152 en avant et au-dessous de la voilure 14.

Tout comme dans le premier mode de réalisation, le plan de l'hélice de chaque groupe de propulsion auxiliaire de la première paire est inclinable. De préférence, dans ce second mode de réalisation l'angle d'inclinaison varie entre par exemple 0° (hélice 57, 58, en position horizontale) et par exemple 110° (plan de l'hélice 57, 58, au-delà de la verticale).

Les plans des hélices, 157 et 158, de chaque groupe de propulsion auxiliaire de la seconde paire, 151 et 152, est de préférence fixe pour simplifier le fonctionnement du drone. Dans ce second mode de réalisation, le plan des hélices repose par exemple dans un plan parallèle au plan XY (angle d'inclinaison de 180°).

Ceci permet que le drone 110 soit à décollage vertical.

Le procédé d'utilisation du drone 110 est sensiblement identique à celui du drone 10 à part qu'il permet, en outre, en fonctionnement nominal, un décollage vertical. L'automate mis en oeuvre par le calculateur 140 prévoit donc des modes supplémentaires :
Pour une phase de décollage vertical, les deux hélices avant 157 et 158 et les deux hélices arrière 57 et 58 inclinées à l'horizontale sont commandées à pleine vitesse.

Puis, pour une phase de transition vers un vol horizontal une fois une altitude de sécurité atteinte, les mâts 63 et 64 sont progressivement inclinés de 0° à 90° et le moteur principal 22 est démarré.

Puis, pour une phase de croisière une fois que la vitesse horizontale du drone 110 est suffisante, les hélices avant et arrière sont arrêtés et les groupes de propulsion auxiliaires sont rétractés dans les carénages 161, 162.

En variante, au lieu de régler uniquement l'angle d'inclinaison des mâts (et donc des plans des hélices) des groupes de propulsion auxiliaires par rapport à l'axe X du drone, il est envisageable de régler également l'angle de pivotement de l'axe de chaque hélice autour de son mât. Ainsi l'orientation du plan dans lequel tourne une hélice est orientable selon deux degrés de liberté. Des actionneurs correspondants sont alors ajoutés à chaque groupe de propulsion auxiliaire et le calculateur est programmé de manière à générer des consignes de réglage de cet angle de pivotement, de préférence indépendamment pour chaque groupe.

Les groupes de propulsion auxiliaires ainsi ajoutés, au-delà de l'effet de propulsion qu'ils peuvent fournir (notamment à l'atterrissage et au décollage en conditions normales), permettent un contrôle de la trajectoire du drone dans tous les axes (roulis, tangage et lacet) en cas de défaillance du dispositif de commandes de vol principal. Cela permet par conséquent d'améliorer la fiabilité du drone sans avoir à implémenter une redondance par des moyens techniques identiques (c'est-à-dire une duplication, voire une triplication des équipements du dispositif de commandes de vol), mais une redondance par des moyens techniques non-identiques.

Les groupes de propulsion auxiliaire et les lois de commandes associées permettent de réaliser une poussée vectorielle : la poussée peut être orientée dans toutes les directions par la conjonction de l'inclinaison variable et de la vitesse variable de chacun des groupes de propulsion auxiliaires. L'orientation de cette poussée vectorielle selon la direction désirée permet de contrôler la vitesse, la poussée et la traînée du drone aérien, en plus de la trajectoire.

La solution proposée répond à la problématique de la fiabilité des drones, tout en restant facile à implémenter, et sans impacter la capacité d'emport du drone. Cette solution est facile à mettre en oeuvre pour mettre à niveau des drones déjà existants.

## Revendications

1. Aéronef sans équipage (10, 110) comportant :
- une cellule comportant un fuselage (12), une voilure (14), et un empennage (16) ;
- au moins un groupe de propulsion principal (20), constitué d'au moins un moteur (22) et d'au moins une hélice (24) ;
- un dispositif de commandes de vol (30), comportant une pluralité d'actionneurs électriques (35), de surfaces mobiles (31 à 34) et de capteurs (36) ; et,
- un calculateur de pilotage automatique (40, 140) propre à adresser des consignes au groupe de propulsion principal et au dispositif de commande de vol,
l'aéronef sans équipage comportant, en outre, une paire de groupes de propulsion auxiliaires (51, 52), montés mobiles sur la cellule, de part et d'autre d'un plan vertical (XZ) longitudinal de la cellule, chaque groupe de propulsion auxiliaire comportant un moteur électrique, une hélice entrainée par le moteur électrique, et un moyen d'orientation du plan de l'hélice par rapport à la cellule,
**caractérisé en ce que** le calculateur de pilotage (40, 140) est programmé pour régler un angle d'orientation et une vitesse de rotation de l'hélice de chaque groupe de propulsion auxiliaire pour pallier un dysfonctionnement du dispositif de commandes de vol, de manière à contrôler la trajectoire de l'aéronef sans équipage dans tous les axes, de sorte que ledit aéronef sans équipage présente une fiabilité opérationnelle accrue.

2. Aéronef selon la revendication 1, dans lequel chaque groupe de propulsion auxiliaire (51, 52) est escamotable à l'intérieur d'un carénage dédié (61, 62) prévu sur la cellule de l'aéronef sans équipage.

3. Aéronef selon la revendication 2, dans lequel chaque carénage (61, 62) intègre au moins une batterie d'alimentation du moteur électrique du groupe de propulsion auxiliaire (51, 52) associé audit carénage.

4. Aéronef selon l'une quelconque des revendications 1 à 3, dans lequel chaque groupe de propulsion auxiliaire (51, 52) est monté à l'arrière et au-dessus de la voilure (14).

5. Aéronef selon l'une quelconque des revendications 1 à 4, dans lequel l'angle d'inclinaison du plan des hélices de la paire de groupes de propulsion auxiliaires est réglable dans une fourchette, dont les seuils sont réglables.

6. Aéronef (110) selon l'une quelconque des revendications 1 à 5, comportant une seconde paire de groupes de propulsion auxiliaires (151, 152), montés sur la cellule, de part et d'autre d'un plan vertical (XZ) longitudinal de la cellule, chaque groupe de propulsion auxiliaire de la seconde paire de groupes de propulsion auxiliaires comportant un moteur et une hélice, chaque hélice tournant dans un plan fixe perpendiculaire à un axe de lacet de l'aéronef sans équipage (110)

7. Aéronef selon l'une quelconque des revendications 1 à 6, dans lequel le calculateur de pilotage automatique (40, 140) est programmé pour exécuter un programme d'ordinateur du type automate propre à passer d'un mode de fonctionnement à un autre, en fonction d'une phase de vol de l'aéronef sans équipage et d'un état de fonctionnement courant du dispositif de commandes de vol (30), du groupe de propulsion principal (20) et de chaque paire de groupes de propulsion auxiliaires (51, 52, 151, 152).

8. Aéronef selon l'une quelconque des revendications 1 à 7, dans lequel le calculateur de pilotage (40, 140) est programmé pour régler un angle d'orientation et une vitesse de rotation de l'hélice de chaque groupe de propulsion auxiliaire pour pallier un dysfonctionnement du groupe de propulsion principal.

9. Procédé de pilotage (100) d'un aéronef sans équipage (10, 110) selon l'une quelconque des revendications 1 à 8, consistant, lors de la survenue d'un dysfonctionnement du groupe de propulsion principal (20) et/ou du dispositif de commandes de vol (30), à utiliser les groupes de propulsion auxiliaires (51, 52) pour contrôler une trajectoire de l'aéronef sans équipage dans tous les axes.

10. Procédé selon la revendication 9, dans lequel la paire de groupes de propulsion auxiliaires (51, 52, 151 152) est commandée par le calculateur de pilotage automatique (40, 140) pour générer une poussée vectorielle.

11. Procédé selon la revendication 9 ou la revendication 10, dans lequel chaque paire de groupes de propulsion auxiliaires (51, 52, 151, 152) est commandée, en fonctionnement nominal, pour venir en appoint du groupe de propulsion principal (20) et/ou du dispositif de commandes de vol (30).

## Patentansprüche

1. Unbemanntes Fluggerät (10, 110), aufweisend:
- eine Zelle, die einen Rumpf (12), einen Flügel (14) und ein Leitwerk (16) aufweist;
- mindestens eine Hauptantriebsgruppe (20), die aus mindestens einem Triebwerk (22) und mindestens einem Propeller (24) besteht;
- eine Flugsteuerungsvorrichtung (30), die eine Vielzahl von elektrischen Aktuatoren (35), beweglichen Flächen (31-34) und Sensoren (36) aufweist; und
- einen Autopilot-Rechner (40, 140), der imstande ist, Anweisungen an die Hauptantriebsgruppe und die Flugsteuerungsvorrichtung zu richten,
wobei das unbemannte Fluggerät ferner ein Paar Hilfsantriebsgruppen (51, 52) aufweist, die beweglich an der Zelle auf beiden Seiten einer vertikalen Ebene (XZ) längs der Zelle angebracht sind, wobei jede Hilfsantriebsgruppe einen Elektromotor, einen durch den Elektromotor angetriebenen Propeller und ein Mittel zur Ausrichtung der Ebene des Propellers in Bezug auf die Zelle aufweist,
**dadurch gekennzeichnet, dass** der Pilot-Rechner (40, 140) programmiert ist, um einen Ausrichtungswinkel und eine Drehgeschwindigkeit des Propellers jeder Hilfsantriebsgruppe zu regeln, um eine Fehlfunktion der Flugsteuerungsvorrichtung derart zu beheben, dass die Flugbahn des unbemannten Fluggeräts in allen Achsen gesteuert wird, so dass das unbemannte Fluggerät eine erhöhte Betriebszuverlässigkeit aufweist.

2. Fluggerät nach Anspruch 1, wobei jede Hilfsantriebsgruppe (51, 52) in einer speziellen Verkleidung (61, 62) versenkbar ist, die an der Zelle des unbemannten Fluggeräts vorgesehen ist.

3. Fluggerät nach Anspruch 2, wobei jede Verkleidung (61, 62) mindestens eine Batterie zur Versorgung des Elektromotors der der Verkleidung zugeordneten Hilfsantriebsgruppe (51, 52) integriert.

4. Fluggerät nach einem der Ansprüche 1 bis 3, wobei jede Hilfsantriebsgruppe (51, 52) hinter und über der Tragfläche (14) angebracht ist.

5. Fluggerät nach einem der Ansprüche 1 bis 4, wobei der Neigungswinkel der Propellerebene des Paars von Hilfsantriebsgruppen innerhalb eines Bereichs einstellbar ist, dessen Schwellenwerte einstellbar sind.

6. Fluggerät (110) nach einem der Ansprüche 1 bis 5, das ein zweites Paar von Hilfsantriebsgruppen (151, 152) aufweist, die an der Zelle auf beiden Seiten einer vertikalen Ebene (XZ) längs der Zelle angebracht sind, wobei jede Hilfsantriebsgruppe des zweiten Paars von Hilfsantriebsgruppen einen Motor und einen Propeller aufweist, wobei sich jeder Propeller in einer festen Ebene senkrecht zu einer Gierachse des unbemannten Fluggeräts (110) dreht.

7. Fluggerät nach einem der Ansprüche 1 bis 6, wobei der Autopilot-Rechner (40, 140) programmiert ist, um ein Rechnerprogramm vom Typ Automat auszuführen, das imstande ist, in Abhängigkeit von einer Flugphase des unbemannten Fluggeräts und einem aktuellen Betriebszustand der Flugsteuerungsvorrichtung (30), der Hauptantriebsgruppe (20) und jedes Paars von Hilfsantriebsgruppen (51, 52, 151, 152) von einem Betriebsmodus in einen anderen zu wechseln.

8. Fluggerät nach einem der Ansprüche 1 bis 7, wobei der Pilot-Rechner (40, 140) programmiert ist, um einen Ausrichtungswinkel und eine Drehgeschwindigkeit des Propellers jeder Hilfsantriebsgruppe zu regeln, um eine Fehlfunktion der Flugsteuerungsvorrichtung zu beheben.

9. Verfahren zur Steuerung (100) eines unbemannten Fluggeräts (10, 110) nach einem der Ansprüche 1 bis 8, das darin besteht, beim Auftreten einer Fehlfunktion der Hauptantriebsgruppe (20) und/oder der Flugsteuerungsvorrichtung (30) die Hilfsantriebsgruppen (51, 52) zu verwenden, um eine Flugbahn des unbemannten Fluggeräts in allen Achsen zu steuern.

10. Verfahren nach Anspruch 9, wobei das Paar von Hilfsantriebsgruppen (51, 52, 151, 152) von dem Autopilot-Rechner (40, 140) gesteuert wird, um einen Vektorschub zu erzeugen.

11. Verfahren nach Anspruch 9 oder Anspruch 10, wobei jedes Paar von Hilfsantriebsgruppen (51, 52, 151, 152) im Nennbetrieb so gesteuert wird, dass es die Hauptantriebsgruppe (20) und/oder die Flugsteuerungsvorrichtung (30) unterstützt.

## Claims

1. An unmanned aircraft (10, 110) including:
- an airframe, including a fuselage (12), a wing (14), and a tail (16);
- at least one main propulsion unit (20), consisting of at least one motor (22) and at least one propeller (24);
- a flight control device (30), including a plurality of electric actuators (35), movable surfaces (31 to 34) and sensors (36); and,
- an auto-pilot computer (40, 140), capable of sending instructions to the main propulsion unit and to the flight control device,
the unmanned aircraft further comprising a pair of auxiliary propulsion units (51, 52), mounted movably on the airframe, on both sides of a longitudinal vertical plane (XZ) of the airframe, each auxiliary propulsion unit including an electric motor, a propeller driven by the electric motor, and means for orienting a plane of the propeller relative to the airframe,
**characterized in that** the auto-pilot computer (40, 140) is programmed for adjusting a steering angle and a propeller speed of each auxiliary propulsion unit so as to compensate for a malfunction of the flight control device and/or of the main propulsion unit, in order to control a trajectory of unmanned aircraft along all axes, so that the unmanned aircraft has an increased operational reliability.

2. The aircraft according to claim 1, wherein each auxiliary propulsion unit (51, 52) is retractable within a dedicated fairing (61, 62) provided on the airframe of the unmanned aircraft.

3. The aircraft according to claim 2, wherein each fairing (61, 62) integrates at least one battery for supplying the electric motor of the auxiliary propulsion unit (51, 52) associated with said fairing.

4. The system according to any of claims 1 to 3, wherein the auxiliary propulsion unit (51, 52) is mounted at the rear of and above the wing (14).

5. The aircraft according to any of claims 1 to 4, wherein a tilt angle of the plane of the propellers of the pair of auxiliary propulsion units is adjustable within a range, the thresholds of which are adjustable.

6. The aircraft (110) according to any of claims 1 to 5, including a second pair of auxiliary propulsion units (151, 152) mounted on the airframe on both sides of a longitudinal vertical plane (XZ) of the airframe, each auxiliary propulsion unit of the second pair of auxiliary propulsion units including a motor and a propeller, each propeller rotating in a fixed plane perpendicular to a yaw axis of the unmanned aircraft (110)

7. The aircraft according to any of claims 1 to 6, wherein the auto-pilot computer (40, 140) is programmed for executing a PLC computer program capable of switching from one mode of operation to another, depending on a phase of flight of the unmanned aircraft and of a current state of operation of the flight control device (30), of the main propulsion unit (20) and of each pair of auxiliary propulsion units (51, 52, 151, 152).

8. The aircraft according to any of claims 1 to 7, wherein the auto-pilot computer (40, 140) is programmed for adjusting a tilt angle and a rotation speed of the propeller of each auxiliary propulsion unit to remedy a malfunction of the main propulsion unit.

9. The method for piloting (100) an unmanned aircraft (10, 110) according to any of claims 1 to 8, consisting, upon the occurrence of a malfunction of the main propulsion unit (20) and/or of the flight control device (30), of using the auxiliary propulsion units (51, 52) for controlling a trajectory of the unmanned aircraft along all axes.

10. The method according to claim 9, wherein the pair of auxiliary propulsion units (51, 52, 151, 152) is controlled by the auto-pilot computer (40, 140), so as to generate a vector thrust.

11. The method according to claim 9 or claim 10, wherein each pair of auxiliary propulsion units (51, 52, 151, 152) is controlled, in nominal operation, so as complement the main propulsion unit (20) and/or the flight control device (30).
